# EUROPEAN PATENT APPLICATION

(11) **EP 1 471 736 A1**
(43) Date of publication of application: **27.10.2004**
(21) Application number: 03009343.9
(22) Date of filing: 24.04.2003
(51) Int. Cl.: H04N 5/46, H04N 5/60

(54) **Method and receiver frontend module for multistandard-reception of analog TV signals**

(71) Applicant: Microtune GmbH & Co KG, 85055 Ingolstadt (DE)
(72) Inventor: Kreil, Johann, 85123 Kartskron (DE)
(74) Representative: Bohnenberger, Johannes, Dr.

(57) **Abstract**

A method for multistandard-reception of analog TV signals is proposed, allowing for the design of space-saving and cost-effective receiver frontend modules, suitable for use in TV diversity systems, in particular in car TV diversity systems, and suitable for use with standard video and sound IF-demodulators, whereby a single audio filter frequency characteristic (SC_1) is employed for at least one of the TV standards M, N and at least one of the TV standards B, G, D, K, I, L, L'.

## Description

The invention relates to a method for multistandard-reception of analog TV signals, allowing for the design of receiver frontend modules suitable for use in TV diversity systems, in particular in car TV diversity systems, and for use with standard video and sound IF-demodulators.

For the transmission of analog TV signals, various transmission standards are existing worldwide. Each particular standard defines a number of channels and their frequency positions, whereby each channel is defined by a certain frequency range, inside of which further the frequency position of a picture carrier (PC) with its side band, a color carrier (CC) and at least one sound carrier (SC) is defined. Important standards are the B- and G-standards originally defined by the CCIR (today ITU-R), which are in use, for example, in Germany, Belgium and Australia, the L-standard and I-standard used in France and the United Kingdom, respectively, the M-standard used in the USA and the N-standard used in Middle and South America.

The standards differ in a number of details, for example in the distance between PC and SC, the channel width and also the intermediate frequency (IF) position of the channel as a whole, i.e. PC, CC and SC. Therefore it is in general not possible to employ a TV receiver adapted to the standards of a particular area or country in a distant area or even in a neighboring country. However, for mobile TV systems, for example car TV systems, it is in general a requirement that these systems be able to receive TV signals according to as many standards as possible. Receivers with multistandard-capabilities are further required for example for TV-sets which are to be sold worldwide or for TV-applications to be implemented in PCs.

To enable receiving multiple standards, a simple approach is to provide a tuner, an IF (processing) stage and possibly even a demodulation stage specifically for each and any of the transmission standards. A receiver according to this concept, of course, has a large form factor and is very expensive due to its large number of components. The requirement for cheap and space-saving multistandard-receivers especially holds for car TV systems, since these systems often employ a diversity concept with several antennas coupled to several separate receiver modules to deal with the difficult receiving conditions related to a moving car. A diversity receiver frontend may comprise up to four modules. The term 'module' as used herein designates a single processing line for TV signals, i.e. each module processes one of the up to four signals received from the antenna system. In a simple approach, a diversity concept for a multistandard-receiver would comprise not only four separate modules for separate antenna signals, but also separate modules for separate standards, which leads to a very large number of components with corresponding costs and form factors.

The design of multistandard-receivers therefore often represents a tradeoff between the number of components and the number of receivable standards. Several solutions are known, as will be described now.

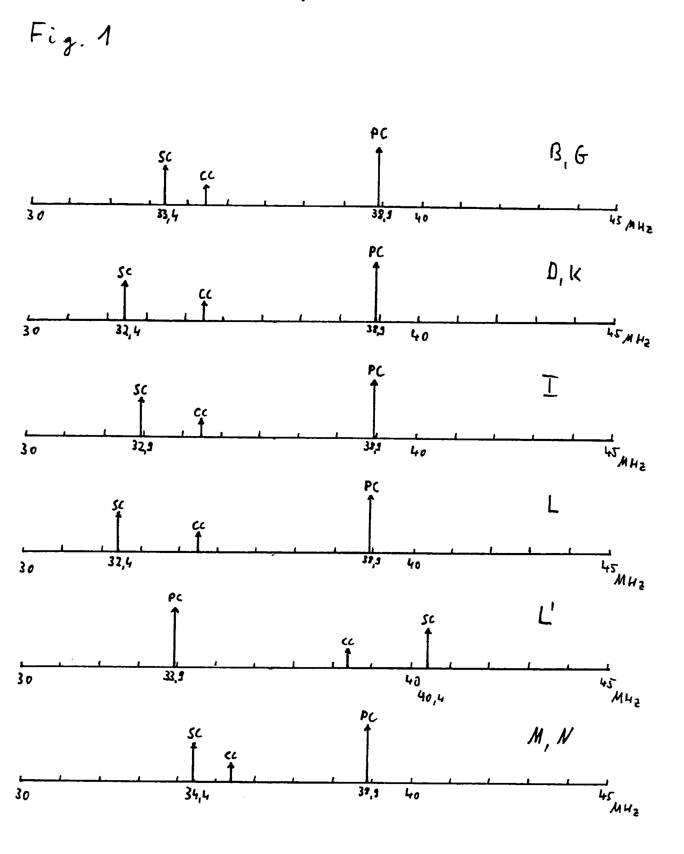

Fig. 1 shows the IF-positions of PC, CC and SC for the most important analog TV standards in a known receiver frontend. The PC of standards B, G, D, K, I, L as well as the corresponding color carrier are positioned consistently to an intermediate frequency of 38.9 MHz. The position of the SC is between 32.4 and 33.4 MHz. For these standards, a simple IF-stage is sufficient, comprising as a video filter component a single video filter and as an audio filter component a single audio filter, as will be described in more detail further below.

The standard L' differs from the abovementioned standards in that the position of the PC and CC are interchanged in the IF-signal and the sound carrier is at a higher frequency than the PC. The standards M, N differ in that the side band of the PC is smaller than for the other standards and accordingly the offset between PC and CC, as well as between PC and SC is less than for the other standards.

According to Fig. 1, with a single tuner coupled to a single IF-stage it is possible to receive the standards B - L and output the separated audio signal and video signal to a standard demodulation circuitry. In a simple approach, a further tuner and IF-stage would be required for standard L' and standards M/N, respectively. In a car TV diversity system, with this approach 12 tuners and IF-stages would be required. Even if tuners are used capable of tuning TV signals according to all standards, for each tuner of the receiver frontend module in the IF-stage three separate audio/video filter pairs are required, which is still a very complicated solution.

Known prior systems comprise at least a single module, or several modules for implementing a diversity concept, which is/are optimized for receiving and filtering the video signal/s only. Then it is possible to receive the PCs (with sidebands) and CCs of all important standards with only two video filters. In these systems, a further sound tuner is provided for sound demodulation. However, with a single sound tuner, no sound diversity is possible.

Alternatively, a method is known according to which an additional mixer is provided at the IF-stage of a module to mix the SC of all standards (between 32.4 MHz and 34.4 MHz, see Fig. 1) to a discrete frequency, typically 10.7 MHz, using an oscillator frequency of 43.1 MHz - 45.1 MHz in the mixer. Since an intermediate frequency of 10.7 MHz is used for car radio systems, this method allows to reuse the radio equipment for demodulating the sound from the TV signal. The method requires many components and leads to a complicated circuitry, resulting in an expensive multistandard receiver.

A further concept for multistandard-receiption is illustrated in Figures 2 - 4. Figures 2 and 3 schematically show frequency response curves or frequency characteristics PC_1, SC_1, SC_2, PC_2 and SC_3 of the video and audio filter components in the IF-stage of a multistandard-module. A single characteristic PC_1 might be employed for the PCs including side bands and CCs of the standards B, G, D, K, I, L and L'. For the audio filter component, an audio filter frequency characteristic SC_1 is required for filtering the SCs of the standards B, G, D, K, I and L. A further audio filter frequency characteristic SC_2 is required for filtering the SC of the standard L'. To be able to receive the M/N-based TV signals, Fig. 3 shows that a further video filter frequency characteristic PC_2 is required, which has a smaller band-pass frequency range than characteristic PC_1. Further, for the SC of standards M/N, an audio characteristic SC_3 needs to be employed.

Fig. 4 schematically shows a receiver frontend module according to the method just described. An analog TV signal is received at antenna 15. The signal is fed into a tuner 16. The tuner 16 is tuned to a particular channel of one of a set of standards according to control commands transmitted to the tuner via a control bus system, for example according to the I²C-system (not shown). A mixer 17 inside the tuner 16 mixes, by using the output from an oscillator 18, the received signal to an IF-signal 19, which comprises PC, CC and SC of the chosen channel at an IF-position. The IF-signal 19 is output to an IF-signal node 20.

The IF-stage 21 comprises a video component having a video filter 22 and an audio filter component having two audio filters 23. The filters are surface acoustic wave (SAW) filters, for example double Nyquist SAW filters. SAW filters require relatively small amounts of space. Recently SAW-filters have become available, which are switchable between two frequency responses. The video filter 22 therefore comprises the video filter frequency characteristics PC_1 and PC_2 shown in Figures 2 and 3. One of the audio filters 23, also a switchable SAW filter, comprises the audio filter frequency characteristics SC_1 and SC_2 shown in Fig. 2. A further audio filter 23 is required, which includes the audio filter frequency characteristic SC_3 as shown in Fig. 3.

The output of the filters is fed to a demodulation circuitry 24, which is adapted to demodulate IF-signals separated in audio/video-signals. The IF-stage further comprises a switch 25, which delivers the output signal filtered by either the bandpass characteristic SC_1 or SC_2 of the switchable audio filter to the demodulation circuitry 24 for the standards B, G, D, K, I, L or L' and delivers the output signal filtered by the bandpass characteristic SC_3 to the demodulation circuitry 24 for the standards M and N.

This receiver frontend module is able to receive TV signals according to the important global standards mentioned above. The filter characteristics to be used are illustrated in Tab. 1. Such a module is, however, still complicated, since in the IF-stage, even after the appearance of switchable filters, three filters and an additional switch are required.

**Tab. 1**

| Standards | video filter characteristic | audio filter characteristic |
|---|---|---|
| B, G, D, K, I, L | PC_1 | SC_1 |
| L' | PC_1 | SC_2 |
| M, N | PC_2 | SC_3 |

Furthermore, since SAW filters have a low input impedance, a direct coupling of three of these filters to the mixer output results in problems regarding reflections and ghosts.

In light of the prior art described, it is an object of the present invention to provide a method for multistandard-reception of analog TV signals according to the most important standards, which allows for the design of a space-saving and cost-effective receiver frontend module, which is suitable for use in TV diversity systems, in particular in car TV diversity systems, and suitable for use with standard video and sound IF-demodulators.

This object is solved with a method according to claim 1 and a receiver frontend module according to claim 4.

The invention is based in part on the idea to adjust the IF-position of a TV signal in a way which differs from the prior art. Fig. 1 shows that typically the PC of an IF-signal is positioned to the same frequency (in Fig. 1, 38.9 MHz, except for standard L'), which minimizes the number of video filters required in the IF stage. According to the invention, it is suggested to take into account, besides the position of the PC, also the frequency position of the SC in order to minimize the total number of filters required.

Therefore, according to the invention, a method for multistandard-reception of analog TV signals, whereby TV signals according to at least one of the TV standards M, N and at least one of the TV standards B, G, D, K, I, L, L' are receivable, comprises the steps of (firstly) mixing and IF-signal from the received TV signal, whereby all channels of a particular TV standard are mixed to the same IF-position, the IF-position depending on the particular TV standard, (secondly) filtering a video signal from the IF-signal, whereby video filter frequency characteristics are employed, (thirdly) filtering an audio signal from the IF-signal, whereby audio filter frequency characteristics are employed. The video respectively audio filter frequency characteristics depend on the particular TV standard. A single audio filter frequency characteristic is employed for at least one of the TV standards M, N and at least one of the TV standards B, G, D, K, I, L, L'.

In a preferred embodiment of the invention, in the mixing step the IF position of the IF signal is adjusted to have the SC of at least one of the TV standards M, N and at least one of the SC of the TV standards B, G, D, K, I, L, L' at frequencies inside a band-pass of the single audio filter frequency characteristic.

According to the invention, the audio filter frequency characteristic for filtering the audio signal from received TV signals according to, for example, the B/G-standard is advantageously re-used for filtering the audio signal from received TV signals according to the M- and/or N-standard. No extra processing for receiving and demodulating the sound signal and no extra mixing step is required, therefore the method is, for example, well suited for use in a diversity concept.

In further embodiments of the inventive method, for reception of at least the TV standards B, G, D, K, I, L, L' and M, N, in the step of filtering a video signal in total two video filter frequency characteristics and in the step of filtering an audio signal in total two audio filter frequency characteristics are employed. The invention allows to reduce, in comparison to the prior art, the number of filters required for multistandard-receiption, where only four filters in total are required for receiption of the most important standards.

A receiver frontend module for multistandard-reception of analog TV signals according to the invention, whereby TV signals according to at least one of the TV standards M, N and at least one of the TV standards B, G, D, K, I, L, L' are receivable, comprises a mixer stage adapted for mixing a received TV signal into an IF-signal provided to an IF-signal note, a video filter component coupled to the IF-signal note for filtering according to a video filter frequency characteristic a video signal from the IF-signal, an audio filter component coupled to the IF-signal note for filtering according to an audio filter frequency characteristic an audio signal from the IF-signal. Both filter components are coupled to an output signal node for outputting their respective output signals to a demodulation circuitry, whereby the audio filter component comprises a single audio filter frequency characteristic for at least one of the TV standards M, N and at least one of the TV standards B, G, D, K, I, L, L'.

A receiver frontend module according to the invention is less complex in comparison to prior art in that only a single audio filter frequency characteristic is required for the mentioned standards, for example B/G and M/N. Furthermore, since only a single audio characteristic is required, a switch or similar component, selecting an output of the at least two filters of the audio filter component of the prior art modules, is no longer required. Therefore, the circuitry of the IF-stage is less complex.

In a preferred embodiment of the receiver frontend module according to the invention, the mixer stage is adapted to adjust the IF position of the IF signal to have the sound carriers of at least one of the TV standards M, N and at least one of the TV standards B, G, D, K, I, L, L' at frequencies inside a band-pass of the single audio filter frequency characteristic.

In case the mixer stage is adapted to adjust the IF-position of the IF-signal according to the TV standards, further components, which would lead to higher costs and would increase the form factor of the module, are superfluous.

In further embodiments of the receiver frontend module of the invention, the mixer stage and both filter components are adapted at least to the TV standards B, G, D, K, I, L, L', M, N and the video filter component comprises in total two video filter frequency characteristics and the audio filter component comprise in total two audio filter frequency characteristics.

Such a module is less complex than a module according to the prior art, although the same standards are receivable. No extra sound tuners and no additional components in the tuner and/or IF-stage (e.g. additional mixers) are required for multistandard-receiption, in particular the standards B, G, D, K, I, L, L' on the one side and M, N on the other side.

In still further embodiments of the invention, the audio filter component of the receiver frontend module comprises a single SAW-filter. Since the number of frequency characteristics required for receiption of multiple TV standards decreases due to the invention, the audio filter component can be simplified in construction.

In a preferred embodiment, this SAW-filter is switchable between at least two filter frequency characteristics, leading to a cost-efficient audio filter component which nevertheless is able to process the IF-signals for the important TV standards described above.

A receiver frontend stage, suitable in particular for a car TV diversity system, comprises two or more receiver frontend modules according to the invention, which are coupled in parallel to an antenna system to provide two or more IF-video signals and two or more IF-audio signals to the demodulation circuitry.

Such a diversity system comprising several receiver frontend modules can be designed particularly space-saving and cost-effective by use of the frontend modules according to the invention. Apart from diversity systems for mobile applications, frontend modules according to the invention might be used in, for example, PC TV applications and more general in TV sets with multistandard applications, for example flat-screen TVs.

The invention is now described in more detail by way of a non-limiting example and by referring to the attached drawings, wherein
Fig. 1 illustrates the IF-position of IF-signals according to the most important global TV standards in a known receiver frontend module, as already discussed;
Fig. 2 illustrates frequency characteristics required for filtering, from an IF-signal according to the standards B, G, D, K, I, L or L', the audio and video signal to be send to a demodulation circuitry, as already discussed;
Fig. 3 illustrates frequency characteristics required according to the prior art for filtering, from an IF-signal according to the standards M or N, the audio and video signal to be send to a demodulation circuitry as already discussed;
Fig. 4 schematically illustrates a receiver frontend module according to the prior art for multistandard-reception of analog TV signals incorporating the frequency characteristics illustrated in Figs. 2 and 3, as already discussed;
Fig. 5 illustrates frequency characteristics required according to the invention for filtering, from an IF-signal according to the standards M or N, the audio and video signal to be send to a demodulation circuitry;
Fig. 6 schematically illustrates a receiver frontend module according to the invention for multistandard-reception of analog TV signals incorporating the frequency characteristics illustrated in Figs. 2 and 5.

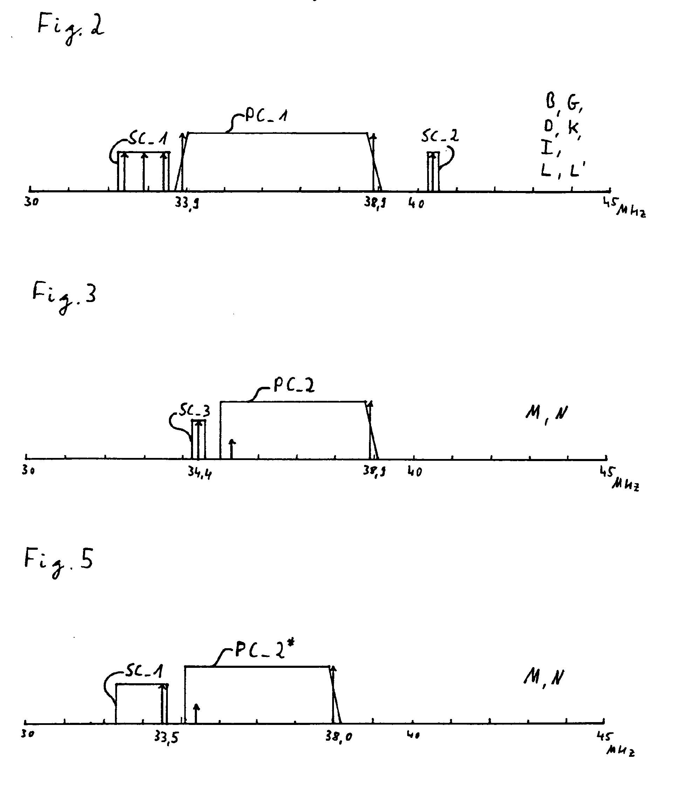

In the embodiment of the invention described here, for filtering the audio signal from an IF-signal according to the standards M/N, the audio filter frequency characteristic used for filtering the audio signal from the IF-signal according to the standards B, G, D, K, I, L is reused. Fig. 5 shows the IF-position of M/N-IF-signals according to this embodiment. Fig. 5 is to be compared to the prior art outlined in the drawing of Fig. 2: The IF-signal has been shifted to lower frequencies. Therefore the SC of the IF-signal falls inside the band-pass SC_1. For filtering the video signal from the M/N-IF-signal, a video filter frequency characteristic PC_2* is required due to the smaller sideband. The PC of the IF-signal is offset from that of the PC of the other standards.

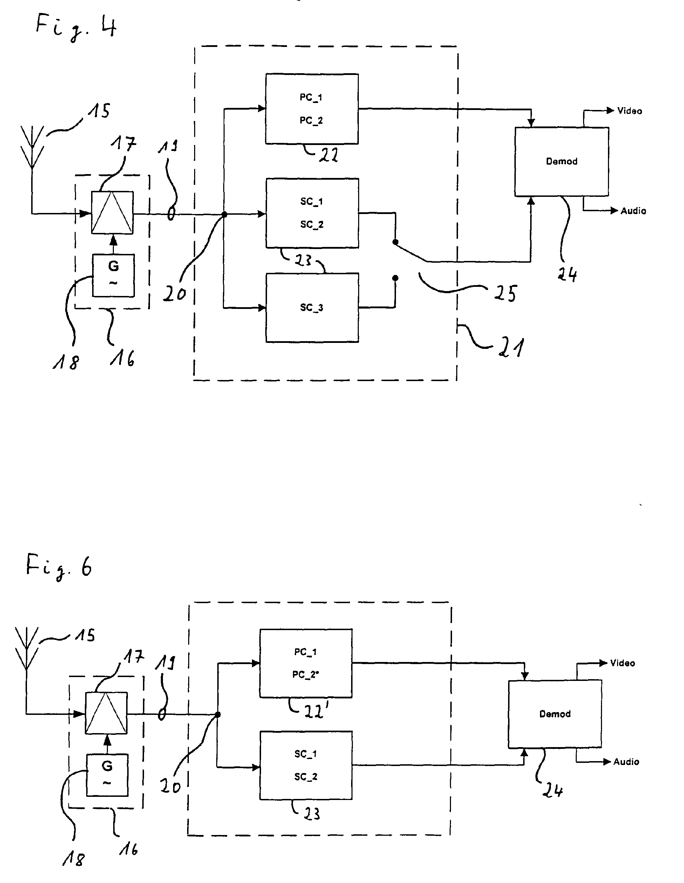

A receiver frontend module adapted for the method illustrated in Figs. 2 and 5 is shown in Fig. 6, which might be compared to Fig. 4: An analog TV signal is received at antenna 15 and is mixed to an intermediate frequency inside tuner 16. The mixing stage of tuner 16 is modified to output IF-signals for the M- or N-standard at IF-positions shifted from positions known from prior art to that given in Fig. 5.

A respective IF-signal 19 is output to the IF-signal node 20. Inside the IF-stage 21, a video filter component comprises a switchable SAW filter 22', which implements the video frequency filter characteristics PC_1 and PC_2*. The audio filter component comprises only a single switchable SAW filter 23, which comprises the frequency characteristics SC_1 and SC_2. A further filter for a filter characteristic SC_3 is not required.

The output of the two filters 22', 23 is directly fed into a demodulation circuitry 24, which remains unchanged in comparison to prior art. A switch is not required.

As given in Tab. 2 below, a TV signal according to one of the standards B, G, D, K, I, L is separated into video and audio signals by the IF-stage with the video filter frequency characteristic PC_1 and audio filter frequency characteristic SC_1, as known from the prior art. Correspondingly, an IF-signal according to the standard L' is separated by using the video filter frequency characteristic PC_1 and audio characteristic SC_2. An IF-signal according to one of the standards M or N is separated by using the video characteristic PC_2* and reusing the audio characteristic SC_1.

**Tab. 2**

| Standards | video filter characteristic | audio filter characteristic |
|---|---|---|
| B, G, D, K, I, L | PC_1 | SC_1 |
| L' | PC_1 | SC_2 |
| M, N | PC_2* | SC_1 |

As evident from the comparison of Figs. 4 and Fig. 6, a receiver frontend module according to the invention requires less components for receiption of the same standards; it comprises only two filters and no switch is required for coupling to the demodulation circuitry.

The embodiment of the invention has been described based on standard components, for example oscillator, mixer, or SAW-filters. It is obvious for those skilled in the art that other components, which achieve similar effects, can also be used. Such components do exist already or might be developed in the future. Furthermore, it is to be understood that the IF-position of the IF-signals for the M/N-standards as illustrated in Fig. 5 can be freely varied as long as the SC of the IF-signal can be filtered with the filter characteristic (SC_1) used for the other standards.

The described embodiment is meant for illustrative purposes only. Variations of it and further embodiments are possible without departing from the scope of the invention, which is specified by the following claims.

### Reference Signs

- PC_1, PC_2, PC_2*: video filter frequency characteristics
- SC_1, SC_2, SC_3: audio filter frequency characteristics
- 15: antenna
- 16: tuner (mixer stage)
- 17: mixer
- 18: oscillator
- 19: tuner IF signal output
- 20: IF-signal node
- 21: IF-stage
- 22, 22': video filter
- 23: audio filter(s)
- 24: demodulation circuitry
- 25: switch

## Claims

1. A method for multistandard-reception of analog TV signals,
whereby TV signals according to at least one of the TV standards M, N and at least one of the TV standards B, G, D, K, I, L, L' are receivable; comprising the steps of
mixing an IF-signal from the received TV signal, whereby all channels of a particular TV standard are mixed to the same IF-position, the IF-position depending on the particular TV standard,
filtering a video signal from the IF-signal, whereby video filter frequency characteristics (PC_1, PC_2*) are employed,
filtering an audio signal from the IF-signal, whereby audio filter frequency characteristics (SC_1, SC_2) are employed,
the video resp. audio filter frequency characteristics depending on the particular TV standard,
**characterized in that**
a single audio filter frequency characteristic (SC_1) is employed for at least one of the TV standards M, N and at least one of the TV standards B, G, D, K, I, L, L'.

2. The method of claim 1,
**characterized in that**
in the mixing step the IF-position of the IF-signal is adjusted (Fig. 5) to have the sound carriers of at least one of the TV standards M, N and at least one of the sound carriers of the TV standards B, G, D, K, I, L, L' at frequencies inside a band-pass of the single audio filter frequency characteristic (SC_1).

3. The method of claim 1 or 2,
**characterized in that**
for reception of at least the TV standards B, G, D, K, I, L, L' and M, N, in the step of filtering a video signal in total two video filter frequency characteristics (PC_1, PC_2*) and
in the step of filtering an audio signal in total two audio filter frequency characteristics (SC_1, SC_2) are employed.

4. A receiver frontend module for multistandard-reception of analog TV signals, whereby TV signals according to at least one of the TV standards M, N and at least one of the TV standards B, G, D, K, I, L, L' are receivable; comprising
a mixer stage (16) adapted for mixing a received TV signal into an IF-signal provided to an IF-signal node (20),
a video filter component (22') coupled to the IF-signal node for filtering according to a video filter frequency characteristic (PC_1, PC_2*) a video signal from the IF-signal,
an audio filter component (23) coupled to the IF-signal node (20) for filtering according to an audio filter frequency characteristic (SC_1, SC_2) an audio signal from the IF-signal,
both filter components coupled to a demodulation circuitry (24) for outputting their respective output signals to,
**characterized in that**
the audio filter component (23) comprises a single audio filter frequency characteristic (SC_1) for at least one of the TV standards M, N and at least one of the TV standards B, G, D, K, I, L, L'.

5. The receiver frontend module of claim 4,
**characterized in that**
the mixer stage (16) is adapted to adjust the IF-position of the IF-signal to have the sound carriers of at least one of the TV standards M, N and at least one of the TV standards B, G, D, K, I, L, L' at frequencies inside a band-pass of the single audio filter frequency characteristic (SC_1).

6. The receiver frontend module of claim 4 or 5,
**characterized in that**
mixer stage (16) and both filter components (22', 23) are adapted at least to the TV-standards B, G, D, K, I, L, L', M, N and
the video filter component (22') comprises in total two video filter frequency characteristics (PC_1, PC_2*) and
the audio filter component (23) comprises in total two audio filter frequency characteristics (SC_1, SC_2).

7. The receiver frontend module of any one of claims 4 to 6,
**characterized in that**
the audio filter component comprises a single surface acoustic wave filter (23) and/or the video filter component comprises a single surface acoustic wave filter (22').

8. The receiver frontend module of claim 7,
**characterized in that**
the or each surface acoustic wave filter is switchable between at least two filter frequency characteristics.

9. A receiver frontend stage, in particular in a car TV diversity system,
**characterized in that**
two or more receiver frontend modules (Fig. 6) of any one of claims 4 to 8 are coupled in parallel to an antenna system to provide two or more IF video signals and two or more IF audio signals to the demodulation circuitry.
